# EUROPEAN PATENT SPECIFICATION

(11) **EP 3 337 141 B1**
(45) Date of publication and mention of the grant of the patent: **23.06.2021**
(21) Application number: 18156373.5
(22) Date of filing: 10.05.2007
(51) Int. Cl.: H04M 1/02

(54) **IMPROVEMENTS IN OR RELATING TO ELECTRONIC DEVICES**
KLAPPBARES ELEKTRONISCHES GERÄT MIT WINKELERKENNUNG ZUM AUSWÄHLEN EINES BETRIEBSMODUS
APPAREIL ÉLECTRONIQUE PLIABLE AVEN DÉTECTION D'ANGLE POUR SÉLECTIONNER UN MODE DE FONCTIONNEMENT

(30) Priority: 16.05.2006 US 436202
(43) Date of publication of application: 20.06.2018
(62) Divisional of application: 07251936.6
(73) Proprietor: Nokia Technologies Oy, 02610 Espoo (FI)
(72) Inventor: Dalby, Anthony, London, W5 4ER (GB); Meyer, Axel E., 00850 Helsinki (FI); Sermon, William, Chalfont St. Giles, Buckinghamshire HP8 4LW (GB); Shirgaonkar, Sameer, London, SW4 9LS (GB); Tompkin, Crispian, El Segundo CA 90245 (US); Wong, Chee, London, N1 2XH (GB); Bradford, Simon, 02260 Espoo (FI); Alfthan, Niilo, 33100 Tampere (FI); Aarras, Mikko, 00400 Helsinki (FI); Christensen, Claus Allan, 2300 København S (DK)
(74) Representative: Novagraaf Technologies

(56) References cited:
- EP-A2- 0 898 405
- WO-A1-2005/053287
- JP-A- H06 161 703
- US-A- 5 467 102
- US-A1- 2003 211 872
- US-A1- 2004 067 770
- US-A1- 2005 125 570
- US-A1- 2006 034 601
- US-B1- 6 373 006

## Description

### Background to the Invention

The invention relates to the field of electronic devices, in particular handheld electronic device comprising electronic displays. Although such devices may be hand-held in use, they do not have to be hand-held in use.

Electronic devices, particularly user-portable radiotelephones (e.g. mobile cellular phones), can comprise two parts which can be folded upon one another in closed and open configurations of the device. Such arrangements allow for compact design of the electronic devices. Such devices often incorporate displays.

There is a need for larger displays as the size of portable electronic devices incorporating display gets smaller.

US 2005/125570 discloses a portable communication device which, in one exemplary embodiment, includes a first position to cover a display assembly and a keyboard assembly, a second position to form a mobile voice phone and a third position to form a personal digital assistant. US 5467102 discloses a portable display device capable of presenting a document in an easy to read format, in which a simultaneous display of different parts of the document in reasonable sizes can be made, by a simple operation of the device. EP 0898405 discloses an upper case and a lower case that are rotatably connected in a connection part. US 6373006 discloses an apparatus for detecting the opening and closing angle which is easy to switch, is reliable, is capable of positively preventing howling from occurring, can be reduced in size and weight, and uses no special components. US 2003/211872 discloses a portable personal communicator includes a body portion and a flip element having a built-in display. WO 2005/053287 discloses a communication apparatus having a first housing member pivotally coupled to a second housing member, a controller operable in a plurality of operation states, and a detector associated with the first and second housing members and connected to the controller.

### Brief Summary of the Invention

The invention is as defined by independent claim 1. Particular embodiments of the invention are present in the dependent claims.

### Brief Description of the Figures

Specific embodiments of the present invention will now be described with reference to the following Figures in which :
Figure 1 is a schematic illustration of an electronic device according to one embodiment of the invention; and
Figure 2 shows plan views of the electronic device of Figure 1 in a first (Figure 2a) and second (Figure 2b) configurations;
Figure 3 is a perspective view of an electronic device according to one embodiment of the invention.

### Detailed Description of Specific Embodiments of the Invention

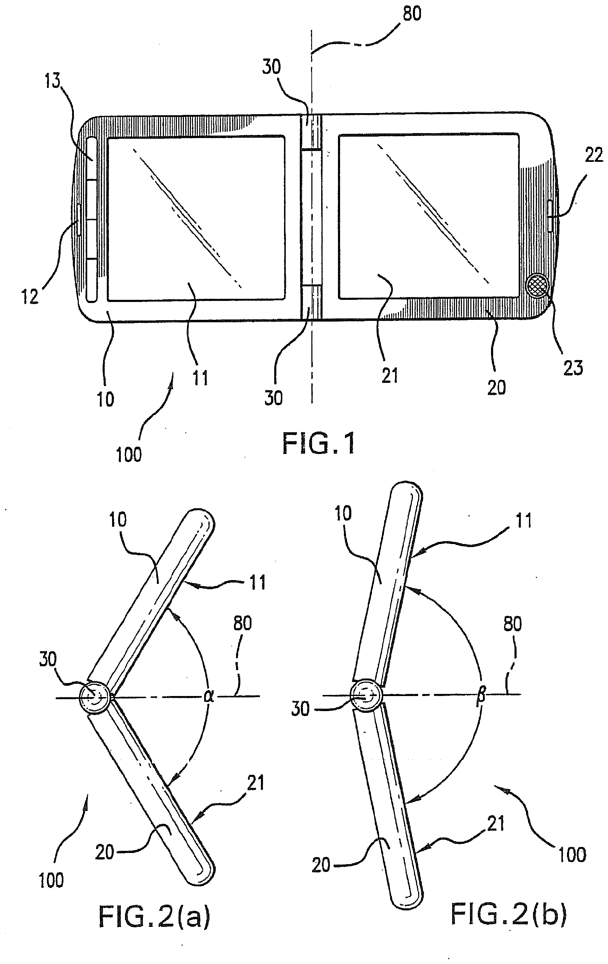

A schematic illustration of an electronic device 100 according to one embodiment of the invention is shown in Figure 1. In this case, the device is a radiotelephone (such as a so called mobile telephone) with additional audio/visual functionality. The additional audio/visual functionality allows the user to use the device to play and/or record audio (e.g. MP3 or other music/audio format) and/or video. In other embodiments, the device 100 may not have radiotelephone functionality.

The device 100 comprises two parts 10, 20 which are foldable about a folding axis 80. Hinge mechanisms 30 are used to allow the parts to be folded into a number of configurations. The parts 10,20 can be folded over one another such that the inner faces of the device touch in a closed configuration. In the closed configuration, the parts 10,20 can be considered to have a zero folding angle between them, whereas in an open configuration, the parts 10, 20 have a non-zero folding angle defined between them. In this case, the device 100 can be opened to a nearly 360 degrees folding angle such that the inner faces of the device 100 in the closed configuration form the outer faces of the device 100 in the fully open configuration.

In this case, the parts 10, 20 are generally rectangular. Other embodiments may have different shaped parts 10, 20. The inner faces of the parts 10, 20 each comprise a respective electronic display 11, 21. Thus, the first part 10 has a first display 11 and the second part 20 has a second display 21. As such, these parts 10, 20 comprise respective first and second means for displaying with said first and second displays.

It will be appreciated that these displays 11, 21 are located on either side of the folding axis 80. In this embodiment, the displays 11, 21 are positioned in close proximity to the folding axis 80. Thus, the gap between the adjacent ends of the displays 11, 21 is quite small in a number of open configurations.

The first part 10 comprises a microphone port 12 and a number of user input elements 13. In this case, the user input elements are keys. The second housing 20 comprises a speaker port 22, and a camera 23. The device 100 is sized so that it is possible to handhold the device when making a telephone call.

The device 100 can be opened into many configurations. Two such configurations are shown in Figure 2 (in plan view). In Figure 2a, the parts 10, 20 are folded to provide a first device configuration, and in Figure 2b, the parts 10, 20 are folded to provide a second device configuration. In the first configuration, the folding angle between the parts is α, and in the second configuration, the folding angle between the parts is β.

The user can answer and/or make a call by opening the foldable device 100 into an open configuration. In some embodiments, the user may also be able to answer and/or make a call in the closed configuration. In one or more general embodiments, the device 100 is folded into an open configuration to allow access to one or more user input elements (e.g. 12, 11, 23) and/or output elements (11. 21, 22) located on one or more of the inner faces of the device 100.

When the device 100 is opened, the first display 11 is arranged to be a user input element (e.g. a touch sensitive screen). Thus, the user can control one or more of the functions of the device 100 by actuating one or more regions on the display 11. In this case, the display 11 provides one or more indications to one or more particular locations which should be actuated (e.g. by depressing) to control one or more of the operations/functions of the device 100.

In one embodiment, the user is given indications to actuate regions of the display 11. In other embodiments, the user may be given indications to actuate one or more user input elements adjacent the first display 11. In this way, for example, input elements 13 can be used as so-called "soft keys", the function performed by them being indicated on an adjacent screen, the function depending on the particular location in the user interface program.

Thus, in the first configuration, the display 11 acts as a user input and/or gives indications to one or more adjacent user input elements 13 i.e. the device 100 operates in a first operating mode. In other embodiments, the adjacent user input elements may be on the other side of the hinge 30 on part 20.

As the device is further opened passed a critical folding angle α_{crit}, which in this case is 160 (+/- 10 degrees), the device 100 is configured to move into a second operating mode. The detection of this critical folding angle can be done by using one or more mechanical/electrical/electromechanical sensors in the device 100.

In the second operating mode, both displays 11, 21 act as displays. In certain embodiments, one or more the displays may also act as user input elements and/or give indications to one or more adjacent user input elements.

In this embodiment, the folding angle β in the second configuration is 170-180 (+/-10 degrees). The second configuration folding angle β is such that the two adjacent displays 11, 21 are substantially in the same plane. The two adjacent displays can be used as a continuous single display. Thus, an image can be partially displayed on the first display 11, and the rest of the image can be displayed on the adjacent second display 21.

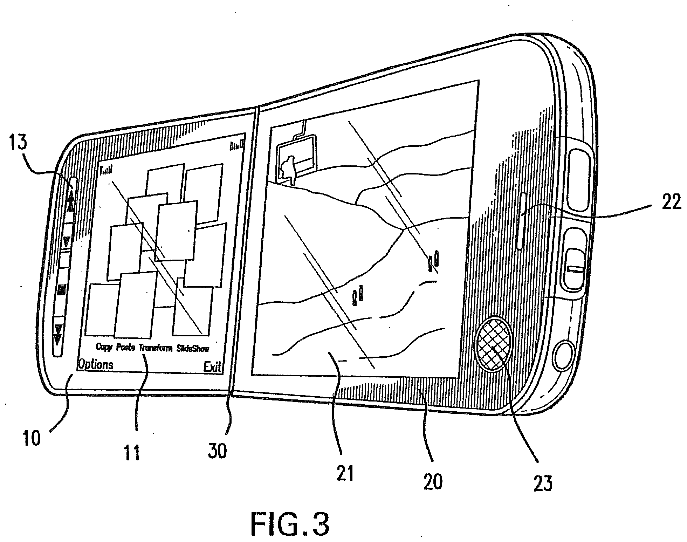

As the underneath of the device 100 is relatively flat, the device 100 can be placed on a support surface to be free-standing (Figure 3). In other embodiments, a stand may be required, and the device 100 may be configured to be attachable to the stand.

In the second configuration, the first display 11 may be useable to provide control over the image which is provided on the second display 21. This may also be true in the first configuration. Figure 3 shows that display 11 is a user interface which allows a user to activate copy, paste, transform, slideshow functions using the display 11. Further options are actuatable (bottom left "options" and bottom right "exit"), and the strength of the battery and the radiosignal strength are also indicated on the display 11. Figure 3 can be for both first and second configurations.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

For example, aspects described in relation to the first display may be on the second display (and vice versa). The first display may not necessarily comprise a microphone port (or microphone functionality). In other embodiments, the radiotelephone functionality may not be linked with the first and configurations of the device. The second display 21 may be turned off or turned on in the first configuration. The device may or may not receive/transmit audio/video transmissions (including broadcast transmissions). The displays may or may not be the same size. The foldable parts may or may not be the same size. Many different mechanisms to detect the folding angle may be provided.

While there have been shown and described and pointed out fundamental novel features of the invention as applied to preferred embodiments thereof, it will be understood that various omissions and substitutions and changes in the form and details of the devices and methods described may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An electronic device (100) comprising:
a first part (10) having a first display (11) and
a second part (20) having a second display (21);
said first and second parts configured to be foldable about a folding axis (80) into a plurality of configurations comprising at least a first closed configuration and a second open configuration,
wherein the device is configured to move from a first operating mode to a second operating mode upon detection of a critical angle between the first and second parts, and
wherein in the first operating mode, the first display is arranged to provide one or more indications to one or more adjacent user inputs (13), and in the second operating mode, the first and second displays are arranged to act as displays,
wherein the first display (11) is configured to provide control over an image which is provided on the second display (21) in the second open configuration.

2. The electronic device (100) of claim 1, wherein the first display (11) is configured to allow for user input in the first closed configuration.

3. The electronic device (100) of claim 1, wherein the first (11) and second (21) display are configured to act together as a single continuous display in the second open configuration.

4. The electronic device (100) of claim 1 or 3, wherein the first display (11) is configured to display a portion of an image and the second display (21) is arranged to display the remaining portion of the image in the second open configuration.

5. The electronic device (100) of claim 1, wherein the first display (11) is configured to provide a visual user interface to an applications program to allow a user to control the second display (21) in the second configuration.

6. The electronic device (100) of claim 1, wherein the first (11) and second displays (21) are configured to display images in the second configuration that are un-related.

7. The electronic device (100) of claim 1, comprising one or more user input elements (13), and wherein, in the second configuration, one or more of the user input elements is arranged to provide input to an applications program to allow a user to control the display of images on one or both of the displays (11, 21).

8. The electronic device (100) of claim 1 wherein, in the second configuration, the first (11) and second (21) displays act as user interface elements.

9. The electronic device (100) of any preceding claim wherein the first (11) and second displays (21) are substantially in the same plane in the second configuration.

10. The electronic device (100) of any preceding claim, wherein the device has stable first and second configurations, with one or more intermediate configurations being comparatively unstable.

11. The electronic device (100) of any preceding claim, further comprising one or more mechanical / electrical / electromechanical sensors configured to detect the critical angle.

12. The electronic device (100) of any preceding claim, wherein the electronic device is a portable radio telephone.

13. The electronic device (100) of any of claims 1 to 11, wherein the electronic device does not have radiotelephone functionality.

## Patentansprüche

1. Elektronische Vorrichtung (100), die Folgendes umfasst:
ein erstes Teil (10) mit einer ersten Anzeige (11) und
ein zweites Teil (20) mit einer zweiten Anzeige (21);
wobei das erste und das zweite Teil dazu ausgelegt sind, um eine Klappachse (80) in eine Vielzahl von Auslegungen, die mindestens eine erste geschlossene Auslegung und eine zweite offene Auslegung umfassen, klappbar zu sein,
wobei die Vorrichtung dazu ausgelegt ist, nach Detektion eines kritischen Winkels zwischen dem ersten und dem zweiten Teil von einem ersten Betriebsmodus in einen zweiten Betriebsmodus zu gehen, und
wobei die erste Anzeige im ersten Betriebsmodus angeordnet ist, eine oder mehrere Angaben für eine oder mehrere benachbarte Benutzereingaben (13) bereitzustellen, und die erste und die zweite Anzeige im zweiten Betriebsmodus angeordnet sind, als Anzeigen zu fungieren,
wobei die erste Anzeige (11) dazu ausgelegt ist, in der zweiten offenen Auslegung eine Steuerung von einem Bild, das auf der zweiten Anzeige (21) bereitgestellt ist, bereitzustellen.

2. Elektronische Vorrichtung (100) nach Anspruch 1, wobei die erste Anzeige (11) dazu ausgelegt ist, in der ersten geschlossenen Auslegung eine Benutzereingabe zu erlauben.

3. Elektronische Vorrichtung (100) nach Anspruch 1, wobei die erste (11) und die zweite (21) Anzeige dazu ausgelegt sind, in der zweiten offenen Auslegung zusammen als eine einzige durchgehende Anzeige zu fungieren.

4. Elektronische Vorrichtung (100) nach Anspruch 1 bis 3, wobei die erste Anzeige (11) dazu ausgelegt ist, in der zweiten offenen Auslegung einen Abschnitt eines Bildes anzuzeigen, und die zweite Anzeige (21) angeordnet ist, den verbleibenden Abschnitt des Bildes anzuzeigen.

5. Elektronische Vorrichtung (100) nach Anspruch 1, wobei die erste Anzeige (11) in der zweiten Auslegung dazu ausgelegt ist, eine optische Benutzerschnittstelle zu einem Anwendungsprogramm bereitzustellen, um es einem Benutzer zu erlauben, die zweite Anzeige (21) zu steuern.

6. Elektronische Vorrichtung (100) nach Anspruch 1, wobei die erste (11) und die zweite Anzeige (21) dazu ausgelegt sind, in der zweiten Auslegung Bilder anzuzeigen, die ohne Beziehung sind.

7. Elektronische Vorrichtung (100) nach Anspruch 1, die ein oder mehrere Benutzereingabeelemente (13) umfasst und wobei ein oder mehrere der Benutzereingabeelemente in der zweiten Auslegung angeordnet sind, eine Eingabe in ein Anwendungsprogramm bereitzustellen, um es einem Benutzer zu erlauben, die Anzeige von Bildern auf einer oder beiden der Anzeigen (11, 21) zu steuern.

8. Elektronische Vorrichtung (100) nach Anspruch 1, wobei die erste (11) und die zweite (21) Anzeige in der zweiten Auslegung als Benutzerschnittstellenelemente fungieren.

9. Elektronische Vorrichtung (100) nach einem der vorhergehenden Ansprüche, wobei sich die erste (11) und die zweite Anzeige (21) in der zweiten Auslegung im Wesentlichen in derselben Ebene befinden.

10. Elektronische Vorrichtung (100) nach einem der vorhergehenden Ansprüche, wobei die Vorrichtung eine stabile erste und zweite Auslegung aufweist, wobei eine oder mehrere Zwischenauslegungen verhältnismäßig instabil sind.

11. Elektronische Vorrichtung (100) nach einem der vorhergehenden Ansprüche, die ferner einen oder mehrere mechanische/elektrische/elektromechanische Sensoren umfasst, die dazu ausgelegt sind, den kritischen Winkel zu detektieren.

12. Elektronische Vorrichtung (100) nach einem der vorhergehenden Ansprüche, wobei die elektronische Vorrichtung ein tragbares Funktelefon ist.

13. Elektronische Vorrichtung (100) nach einem der Ansprüche 1 bis 11, wobei die elektronische Vorrichtung keine Funktelefonfunktionalität aufweist.

## Revendications

1. Dispositif électronique (100) comprenant :
une première partie (10) comportant un premier dispositif d'affichage (11) et
une seconde partie (20) comportant un second dispositif d'affichage (21) ;
lesdites première et seconde parties étant configurées pour pouvoir être pliées autour d'un axe de pliage (80) en une pluralité de configurations comprenant au moins une première configuration fermée et une seconde configuration ouverte,
dans lequel le dispositif est configuré pour passer d'un premier mode de fonctionnement à un second mode de fonctionnement lors de la détection d'un angle critique entre les première et seconde parties, et
dans lequel, dans le premier mode de fonctionnement, le premier dispositif d'affichage est conçu pour fournir une ou plusieurs indications sur une ou plusieurs entrées d'utilisateur adjacentes (13), et dans le second mode de fonctionnement, les premier et second dispositifs d'affichage sont conçus pour faire office de dispositifs d'affichage,
dans lequel le premier dispositif d'affichage (11) est configuré pour permettre la commande d'une image qui est présentée sur le second dispositif d'affichage (21) dans la seconde configuration ouverte.

2. Dispositif électronique (100) selon la revendication 1, dans lequel le premier dispositif d'affichage (11) est configuré pour permettre une entrée d'utilisateur dans la première configuration fermée.

3. Dispositif électronique (100) selon la revendication 1, dans lequel les premier (11) et second (21) dispositifs d'affichage sont configurés pour faire ensemble office de seul dispositif d'affichage continu dans la seconde configuration ouverte.

4. Dispositif électronique (100) selon la revendication 1 ou 3, dans lequel le premier dispositif d'affichage (11) est configuré pour afficher une partie d'une image et le second dispositif d'affichage (21) est conçu pour afficher la partie restante de l'image dans la seconde configuration ouverte.

5. Dispositif électronique (100) selon la revendication 1, dans lequel le premier dispositif d'affichage (11) est configuré pour fournir une interface utilisateur visuelle à un programme d'application pour permettre à un utilisateur de commander le second dispositif d'affichage (21) dans la seconde configuration.

6. Dispositif électronique (100) selon la revendication 1, dans lequel les premier (11) et second (21) dispositifs affichage sont configurés pour afficher dans la seconde configuration des images qui sont sans rapport les unes avec les autres.

7. Dispositif électronique (100) selon la revendication 1, comprenant un ou plusieurs éléments d'entrée d'utilisateur (13), et dans lequel, dans la seconde configuration, un ou plusieurs des éléments d'entrée d'utilisateur sont conçus pour fournir une entrée à un programme d'application pour permettre à un utilisateur de commander l'affichage d'images sur l'un ou sur l'un et l'autre des dispositifs d'affichage (11, 21).

8. Dispositif électronique (100) selon la revendication 1, dans lequel, dans la seconde configuration, les premier (11) et second (21) dispositifs d'affichage font office d'éléments d'interface utilisateur.

9. Dispositif électronique (100) selon l'une quelconque des revendications précédentes, dans lequel les premier (11) et second (21) dispositifs d'affichage sont sensiblement dans le même plan dans la seconde configuration.

10. Dispositif électronique (100) selon l'une quelconque des revendications précédentes, dans lequel le dispositif présente des première et seconde configurations stables, avec une ou plusieurs configurations intermédiaires qui sont comparativement instables.

11. Dispositif électronique (100) selon l'une quelconque des revendications précédentes, comprenant en outre un ou plusieurs capteurs mécaniques/électriques/électromécaniques configurés pour détecter l'angle critique.

12. Dispositif électronique (100) selon l'une quelconque des revendications précédentes, dans lequel le dispositif électronique est un radiotéléphone portable.

13. Dispositif électronique (100) selon l'une quelconque des revendications 1 à 11, dans lequel le dispositif électronique ne possède pas de fonctionnalité de radiotéléphone.
